# EUROPÄISCHE PATENTANMELDUNG

(11) **EP 4 506 538 A1**
(43) Veröffentlichungstag der Anmeldung: **12.02.2025**
(21) Anmeldenummer: 24193378.7
(22) Anmeldetag: 07.08.2024
(51) Int. Cl.: F01D 5/02, B23K 20/12, F01D 5/30, F04D 29/26, F16D 1/068, F01D 5/04, B23P 15/00

(54) **VERFAHREN ZUM VERBINDEN EINES TURBINENRADS MIT EINER ROTORWELLE, TURBOLADER MIT ROTORWELLE UND TURBINENRAD**

(30) Priorität: 08.08.2023 DE 102023121099
(71) Anmelder: Rolls-Royce Solutions GmbH, 88045 Friedrichshafen (DE)
(72) Erfinder: Böckelmann, Lukas, 88212 Ravensburg (DE); Dobrowolski, Michael, 88069 Tettnang (DE); Böschen, Reiner, 88697 Bermatingen (DE)
(74) Vertreter: Eisenführ Speiser

(57) **Zusammenfassung**

Die Erfindung betrifft ein Verfahren (100, 200) zum Verbinden eines Turbinenrads (1, 1') mit einer Rotorwelle (3, 3') umfassend: Positionieren des Turbinenrades (1, 1') und der Rotorwelle (3, 3') relativ zueinander derart, dass die Fügeabschnitte (5, 7; 5', 7') einander zugewandt sind und eine gemeinsame Fügestelle (9, 9') definieren, Anlagern eines Zusatzwerkstoffs (51, 51') an der Fügestelle (9, 9'), und Verbinden des Turbinenrades (1, 1') und der Rotorwelle (3, 3') mittels des Zusatzwerkstoffs (51, 51'). Es wird alternativ ein Verfahren (300) zum Verbinden eines Turbinenrads (1", 1‴) mit einer Rotorwelle vorgeschlagen mit den Schritten: Bereitstellen eines Turbinenrades (1", 1‴), eines negativ korrespondierend ausgebildeten Einlegers, und einer Rotorwelle (3"), Einführen des Einlegers (13, 13') in die Ausnehmung des Turbinenrades (1", 1‴), Positionieren des Turbinenrades (1", 1‴) samt Einleger (13, 13') und der Rotorwelle (3") derart, dass die Fügeabschnitte (15, 7") einander zugewandt sind und eine gemeinsame Fügestelle (9") definieren, und Verbinden des Turbinenrades (1", 1‴) und der Rotorwelle (3") mittels Verschweißen des Einlegers (13, 13') und der Rotorwelle (83'), vorzugsweise mittels Reibschweißen an der Fügestelle (9").

## Beschreibung

Die Erfindung betrifft ein Verfahren zum Verbinden eines Turbinenrads mit einer Rotorwelle eines Turboladers, insbesondere eines Abgasturboladers, wobei das Turbinenrad und/oder die Rotorwelle jeweils einen Fügeabschnitt aus einem nicht-reibschweißfähigen Werkstoff aufweisen.

Die Erfindung betrifft in einem weiteren Aspekt ein Verfahren zum Verbinden eines Turbinenrads mit einer Rotorwelle eines Turboladers, insbesondere eines Abgasturboladers, wobei das Turbinenrad zumindest partiell aus einem nicht-reibschweißfähigen Werkstoff ausgebildet ist.

Die Erfindung betrifft ferner einen Turbolader, insbesondere Abgasturbolader, mit einer Rotorwelle und einem mit der Rotorwelle verbundenen Turbinenrad.

Turbinenrad und Rotorwelle sind im System des Turboladers schnell rotierende Teile, bei denen bereits aufgrund der hohen Rotationsgeschwindigkeiten und der funktionsgemäß über die Rotorwelle übertragenen Drehmomente signifikante Kräfte auf die Verbindung von Turbinenrad und Rotorwelle wirken. Deswegen kommt der drehfesten Verbindung zwischen Turbinenrad und Rotorwelle in der Fertigung besondere Bedeutung zu.

Da vor allem die Turbinenräder sehr hohen thermischen Belastungen ausgesetzt sind, werden die Turbinenräder typischerweise partiell oder vollständig aus thermisch hoch belastbaren Werkstoffen hergestellt. Insbesondere dann, wenn auch die rotatorisch bewegte Masse gering gehalten werden soll, kommen hier bevorzugt Nicht-Schwermetall-Legierungen zum Einsatz, wie beispielsweise Titanaluminide.

Demgegenüber wird üblicherweise angestrebt, die Rotorwelle aus einem vergleichsweise kostengünstigen Material herzustellen, beispielsweise aus einer Stahllegierung.

Es besteht bei solchen Materialkombinationen die Herausforderung, eine technisch zuverlässige, prozesssicher erreichbare Verbindung zwischen dem Turbinenrad einerseits und der Rotorwelle andererseits zu schaffen. So ist beispielsweise aus DE 10 2012 217 560 A1 ein Verfahren bekannt, bei dem ein Turbinenrad aus einer hochwarmfesten Metalllegierung mit einer Stahlwelle derart verbunden wird, dass zwischen dem Turbinenrad und der Rotorwelle ein Zwischenstück eingesetzt wird, welches mittels Löten mit dem Turbinenrad verbunden wird, und auf einer gegenüberliegenden Seite mittels Schweißen mit der Rotorwelle verbunden wird.

Aus US 9,803,482 B2 ist ein Verfahren zum Verbinden eines Turbinenrads mit einer Rotorwelle bekannt, bei dem das Turbinenrad kraftschlüssig mittels einer Verschraubung mit der Rotorwelle verbunden wird und dann zusätzlich stoffschlüssig mit der Rotorwelle verbunden wird.

Das kraftschlüssige Verbinden hat sich als nachteilig erwiesen, weil aufgrund der geringen Klemmlänge der Schraubverbindung die Gefahr des selbsttätigen Lösens nicht ausgeschlossen werden kann.

Das Verbinden des Turbinenrads mittels eines Zwischenstücks mittels Löten ist zwar prozesssicher, erfordert allerdings in der Herstellung zusätzliche Prozessschritte und erzeugt damit höhere Kosten und höheren Handhabungsaufwand in der Herstellung als wünschenswert wäre.

Es sind auch Versuche bekannt, bei denen das Turbinenrad kraftschlüssig mittels Verklemmen mit der Rotorwelle verbunden werden soll. Hierbei hat sich als negativ herausgestellt, dass die Klemmkraft der Klemmung über einen großen Temperaturbereich nur schwer aufrechterhalten werden kann.

Der Erfindung lag demzufolge die Aufgabe zugrunde, ein Verfahren zum Verbinden des Turbinenrads mit der Rotorwelle anzugeben, das die vorstehend beschriebenen Nachteile möglichst weitgehend überwindet. Der Erfindung lag insbesondere die Aufgabe zugrunde, ein Verfahren zum Verbinden des Turbinenrads mit der Rotorwelle anzugeben, das kostengünstig durchführbar ist, ein effizientes Handling der Bauteile ermöglicht, und hierbei nicht die Festigkeit der Verbindung und die Langlebigkeit der verbundenen Teile beeinträchtigt.

Die Erfindung löst die ihr zugrundeliegende Aufgabe, indem sie in mehreren Aspekten ein Verfahren zum lötfreien Verbinden eines Turbinenrads mit einer Rotorwelle angibt.

In einem ersten Aspekt schlägt die Erfindung bei einem solchen lötfreien Verfahren der eingangs bezeichneten Art vor, dass das Verfahren die folgenden Schritte umfasst:
- Positionieren des Turbinenrads und der Rotorwelle relativ zueinander derart, dass die Fügeabschnitte einander zugewandt sind und eine gemeinsame Fügestelle definieren,
- Anlagern eines Zusatzwerkstoffs an der Fügestelle, und
- Verbinden des Turbinenrades und der Rotorwelle mittels des Zusatzwerkstoffs.

Die Erfindung folgt hierbei dem Ansatz, dass es durch das Anlagern eines Zusatzwerkstoffs an der Fügestelle, also über beide Fügeabschnitte hinweg, möglich ist, eine mechanische Verbindung zwischen den Fügeabschnitten zu erzeugen, die kein separates Anlöten eines Zwischenbauteils erfordern, sondern unmittelbar das Turbinenrad und die Rotorwelle miteinander verbinden, und die kein Schweißen, insbesondere kein Reibschweißen der Bauteile miteinander erfordern. Der Zusatzwerkstoff ist vorzugsweise ein metallischer Werkstoff.

Das Turbinenrad ist in bevorzugten Ausführungsformen partiell oder vollständig aus einem Titanaluminid, einem Eisenaluminid, oder einem Gusswerkstoff auf Nickelbasis ausgebildet.

Die Rotorwelle ist in bevorzugten Ausführungsformen partiell oder vollständig aus einem Edelbaustahl ausgebildet, vorzugsweise aus einem Vergütungsstahl, warmfesten Stahl oder Werkzeugstahl. Unter einem Edelbaustahl werden erfindungsgemäß Stahllegierungen verstanden, die eines oder mehrere Legierungselemente (außer Kohlenstoff) aufweisen, wie beispielsweise Mangan, Silizium, Nickel, Titan, Kupfer, Chrom, Aluminium, wobei es sich vorzugsweise um Edelstähle nach DIN EN 10027-2 handelt.

Das Anlagern des Zusatzwerkstoffs kann auf verschiedenen Wegen erfolgen, worauf in den nachfolgenden bevorzugten Ausführungsformen jeweils noch eingegangen wird.

Vorteilhafte allgemeine Weiterbildungen des Verfahrens werden ebenfalls nachstehend angegeben.

In einer ersten vorteilhaften Weiterbildung des Verfahrens werden die Rotorwelle und das Turbinenrad derart zueinander positioniert, dass die Fügeabschnitte aneinander anliegen. Hierdurch kann sichergestellt werden, dass der angelagerte, vorzugsweise metallische, Zusatzwerkstoff direkt auf die Fügeabschnitte aufgetragen wird, ohne zwischen der Rotorwelle und dem Turbinenrad durchsacken zu können.

In einer bevorzugten Ausführungsform weisen die Fügeabschnitte jeweils eine umlaufende äußere Ausnehmung auf, und der Schritt des Positionierens umfasst das Bilden einer umlaufenden Nut an der Fügestelle aus den beiden Fügeabschnitten. Mit anderen Worten bildet jeder der Fügeabschnitte eine sich in einer Längsrichtung der Verbindung aus Turbinenrad und Rotorwelle erstreckenden Fügestelle. Die Fügestelle weist vorzugsweise eine aus den beiden Fügeabschnitten gebildete Nutform auf, wobei jeder der Fügeabschnitte eine Flanke der Nut aufweist.

In einer weiteren bevorzugten Ausführungsform weisen die Fügeabschnitte jeweils eine konisch verlaufende Ausnehmungsflanke auf. Hierdurch wird die Fügestelle spannungsgünstig ausgebildet.

In einer weiteren bevorzugten Ausführungsform wird der Schritt des Anlagerns des Zusatzwerkstoffs so lange fortgeführt, bis die Fügestelle partiell oder vollständig verfüllt ist.

Der Zusatzwerkstoff ist vorzugsweise ein metallischer Werkstoff, der im angelagerten Zustand, oder nach nachfolgender Wärmebehandlung, eine mit den Werkstoffen des Turbinenrads und der Rotorwelle vergleichbare Festigkeit, aufweist. Der Zusatzwerkstoff weist vorzugsweise thermophysikalische Eigenschaften auf, die an die thermophysikalischen Eigenschaften der Werkstoffe des Turbinenrads und der Rotorwelle soweit angepasst sind, dass im Betrieb des Turboladers, also bei betriebsmäßigen Drehzahlen und Temperaturen, die Integrität der Fügeverbindung nicht beeinträchtigt wird. Vorzugsweise, aber nicht ausschließlich, ist der Zusatzwerkstoff ein Titanaluminid oder ein warmfester Stahl.

In einer bevorzugten Ausführungsform des Verfahrens erfolgen das Anlagern und das Verbinden zugleich mittels elektrochemischen Abscheidens des Zusatzwerkstoffs an der Fügestelle, vorzugsweise mittels Galvanotechnik.

Der Vorteil des Einsatzes von Galvanotechnik zum Verfüllen der Fügestelle wird darin gesehen, dass zum einen im Grunde genommen beliebige Schichtdicken erzielbar sind, weil der Anlagerungsprozess so lange anhält, wie eine entsprechende Spannung anliegt. Der galvanische Prozess erfolgt hierbei nach allgemein bekannten Parametern.

In einer weiteren, alternativ bevorzugten Ausführungsform des Verfahrens erfolgt das Anlagern und das Verbinden zugleich mittels thermischen Beschichtens, vorzugsweise mittels thermischen Spritzens. Besonders bevorzugt wird zum Verbinden in dieser Ausführungsform Kaltgasspritzen, insbesondere Hochgeschwindigkeits-Kaltgasspritzen (HPS Cold Spray), oder Flammspritzen, insbesondere Hochgeschwindigkeits-Flammspritzen angewendet. Das thermische Spritzen erfolgt ebenfalls vorzugsweise nach allgemein bekannten Parametern.

Es hat sich herausgestellt, dass beide der vorgenannten Verfahrensvarianten zu einer ausreichend festen Verbindung zwischen Turbinenrad und Rotorwelle führen, die eine hohe Temperaturbeständigkeit und gute Prozesssteuerung gewährleisten, gleichzeitig ist die Anzahl der Prozessschritte gering, und die Verbindung kann in der Regel in ein und demselben Betrieb vorgenommen werden, wohingegen beispielsweise beim Verbinden mittels Löten in der Lieferkette für die verschiedenen Prozessschritte unterschiedliche Fertigungs- oder Zulieferbetriebe nötig wären.

Vorzugsweise erfolgt in einer Verfahrensvariante, die das thermische Beschichten einsetzt, im Verfahren ferner der Schritt des Abkühlens der Fügestelle nach erfolgtem Anlagern des Zusatzwerkstoffs. Hierdurch wird eine Abfuhr der Wärme erreicht, die aufgrund der hohen kinetischen Energie beim Aufprall im Fügebereich durch plastische Verformung in Wärme umgesetzt wird. Das expandierende Gas, welches beim thermischen Spritzen zum Einsatz kommt, dient in erste Linie zum Beschleunigen der Partikel.

Vorstehend wurde unter anderem auf Ausführungsformen verwiesen, bei denen die Fügeabschnitte jeweils eine umlaufende äußere Ausnehmung aufweisen. In einer weiteren bevorzugten Ausführungsform weisen die Fügeabschnitte jeweils eine Stirnfläche auf, und die Fügestelle ist an einer oder beiden Stirnflächen ausgebildet. Weiter vorzugsweise erfolgt das Anlagern des Zusatzwerkstoffs auf eine oder beide Stirnflächen, bevor die Rotorwelle und das Turbinenrad relativ zueinander positioniert werden.

In einer weiteren bevorzugten Ausführungsform erfolgt das Anlagern des Zusatzwerkstoffs mittels thermischen Beschichtens, vorzugsweise mittels thermischen Spritzens, besonders bevorzugt mittels eines der Folgenden: Kaltgasspritzen, insbesondere Hochgeschwindigkeits-Kaltgasspritzen, oder Flammspritzen, insbesondere Hochgeschwindigkeits-Flammspritzen. Der mittels thermischen Spritzens angelagerte Zusatzwerkstoff ist vorzugsweise ein reibschweißfähiger Werkstoff.

Das Verbinden der Rotorwelle und des Turbinenrads erfolgt in einer Verfahrensvariante, bei der die Fügeabschnitte jeweils an der Stirnfläche ausgebildet sind, vorzugsweise nach dem Schritt des Anlagerns des Zusatzwerkstoffs.

Weiter vorzugsweise erfolgt in einer Ausführungsform, bei der der angelagerte Zusatzwerkstoff reibschweißfähig ist, das Verbinden der Rotorwelle und des Turbinenrads mittels Reibschweißen, vorzugsweise mittels Rotationsreibschweißen, an der Fügestelle, indem der angelagerte Zusatzwerkstoff verschweißt wird. Es hat sich herausgestellt, dass hierdurch eine überraschend feste Verbindung zwischen Turbinenrad und Rotorwelle möglich ist, wobei die mechanische Verbindung zwischen dem angelagerten Zusatzwerkstoff und dem Turbinenrad so gut ist, dass die Verbindung auch nach dem Verschweißen des angelagerten Zusatzwerkstoffs mit der Rotorwelle noch ausreichend Festigkeit an der Fügestelle bietet.

Die Erfindung schlägt zur Lösung der eingangs bezeichneten Aufgabe in einem zweiten Aspekt ein Verfahren vor, bei dem jedenfalls das Turbinenrad zumindest partiell aus einem nicht-reibschweißfähigen Werkstoff ausgebildet ist, wobei das Verfahren die Schritte umfasst:
- Bereitstellen eines Turbinenrades mit einer Längsachse, einer inneren sich entlang der Längsachse erstreckenden Ausnehmung, Bereitstellen eines zur drehfesten Aufnahme in der Ausnehmung eingerichteten, negativ korrespondierend ausgebildeten Einlegers, und einer Rotorwelle, wobei der Einleger und die Rotorwelle jeweils einen Fügeabschnitt aufweisen, der aus einem reibschweißfähigen Werkstoff ausgebildet ist,
- Einführen des Einlegers in die Ausnehmung des Turbinenrades,
- Positionieren des Turbinenrades samt Einleger und der Rotorwelle relativ zueinander derart, dass die Fügeabschnitte einander zugewandt sind und eine gemeinsame Fügestelle definieren, und
- Verbinden des Turbinenrades und der Rotorwelle mittels Verschweißen des Einlegers und der Rotorwelle, vorzugsweise mittels Reibschweißen, besonders bevorzugt Rotationsreibschweißen, an der Fügestelle.

Während im Verfahren des ersten Aspekts auf einen Einleger im Sinne eines Zwischenkörpers zwischen Turbinenrad und Rotorwelle auch verzichtet wird, hat sich in diesem Aspekt der Erfindung auch die Verwendung eines Einlegers als sinnvolle lötfreie Variante ergeben. Das Verfahren macht sich im zweiten Aspekt die Erkenntnis zunutze, dass das Turbinenrad nicht notwendigerweise reibschweißfähig sein muss, solange der Einleger und die Rotorwelle jeweils reibschweißfähig ausgebildet sind und mittels Reibschweißen miteinander verbunden werden können, solange eine ausreichende Drehmomentübertragung zwischen dem Einleger und dem Turbinenrad gewährleistet werden kann. Es hat sich gezeigt, dass eine stoffschlüssige Verbindung zwischen Einleger und Turbinenrad nicht notwendig ist, sondern dass die Drehmomentübertragung zwischen Turbinenrad und Einleger vorteilhaft gewährleistet werden kann, wenn der Einleger formschlüssig in eine Auslegung des Turbinenrads eingeführt wird.

In einer bevorzugten Ausführungsform weist die Ausnehmung im Turbinenrad einen nichtzylindrischen Formschlussabschnitt auf, und der Einleger wird derart in die Ausnehmung eingeführt, dass er formschlüssig in den Formschlussabschnitt eingreift. Vorzugsweise sind der Einleger und der Formschlussabschnitt zum Ausbilden einer Übergangspassung oder einer Presspassung ausgebildet. Der nichtzylindrische Formschlussabschnitt ist vorzugsweise ein ovaler Formschlussabschnitt, ein polygonaler Formschlussabschnitt wie etwa ein Vierkantabschnitt oder ein Keilwellenabschnitt, oder eine Mischform aus geraden und gekrümmten Flächen.

Die Erstreckung des Formschlussabschnitts in Längsrichtung des Turbinenrads kann variabel gestaltet werden, um eine ausreichende Klemmlänge, abhängig von den zu übertragenden Kräften, bereitzustellen.

In einer weiteren bevorzugten Ausführungsform erstreckt sich die Ausnehmung vollständig durch das Turbinenrad hindurch, und der Einleger weist an einem dem Fügeabschnitt gegenüberliegenden Ende einen Kopfabschnitt auf, wobei die Ausnehmung einen inneren Absatz aufweist, und der Kopfabschnitt sich im eingelegten Zustand an dem Absatz abstützt. Hierdurch wird die axiale Fixierung des Turbinenrads an der Rotorwelle unterstützt. Wenn der Einleger und das Turbinenrad dergestalt zueinander positioniert werden, dass der Kopfabschnitt immer in Anlage mit dem Absatz gebracht wird, kann zudem das Einhalten einer konsistent gleichen Klemmlänge zwischen Einleger und Formschlussabschnitt des Turbinenrades sichergestellt werden.

In einer weiteren bevorzugten Ausführungsform weist die Ausnehmung eine Länge auf, welche die Länge des Einlegers überschreitet. Der Fügeabschnitt der Rotorwelle wird in dieser Ausführungsform ebenfalls in die Ausnehmung des Turbinenrads eingeführt, sodass das Turbinenrad die Fügestelle überdeckt, wenn der Einleger eingelegt ist und das Turbinenrad und die Rotorwelle relativ zueinander positioniert sind.

Diese Ausführungsform bringt den besonderen Vorteil mit sich, dass die Fügestelle durch das Turbinenrad abgedeckt wird, weil sie sich in der Ausnehmung befindet. Die beim Reibschweißen gebildete Schweißwulst wird daher durch das Turbinenrad von der Umgebung abgeschirmt, und es ist keine mechanische spanende Bearbeitung der Schweißnaht an der Fügestelle im Nachgang zum Reibschweißen erforderlich.

In einer weiteren bevorzugten Ausführungsform ist in der Ausnehmung eine umlaufende Nut ausgebildet, und die Rotorwelle, das Turbinenrad und der Einleger werden derart positioniert, dass die Fügestelle in Längsrichtung mit der Nut zusammenfällt, wobei sich vorzugsweise beim Verschweißen eine Schweißwulst in der Nut bildet. Die umlaufende Nut in der Ausnehmung dient zur Aufnahme der Schweißwulst und kann auch dazu beitragen, dass die sich in der Nut ausbreitende Schweißwulst eine zusätzliche Sicherung gegen ungewolltes Abziehen des Turbinenrades von der Rotorwelle ausbildet.

In einer weiteren bevorzugten Ausführungsform weisen die Rotorwelle und der Einleger in ihren Fügeabschnitten jeweils eine Stirnfläche auf, und in der Stirnfläche ist jeweils, oder in zumindest einem der beiden Körper, eine Ausnehmung vorgesehen, wobei die Rotorwelle, das Turbinenrad und der Einleger derart positioniert werden, dass die Ausnehmung oder die Ausnehmungen in den Stirnflächen an der Fügestelle eine Kavität bildet bzw. bilden, wobei sich vorzugsweise beim Verschweißen eine Schweißnaht in der Kavität bildet.

Die Erfindung betrifft in einem weiteren Aspekt einen Turbolader, insbesondere Abgasturbolader, mit einer Rotorwelle und einem mit der Rotorwelle verbundenen Turbinenrad. Die Erfindung löst die eingangs bezeichnete Aufgabe bei einem solchen Turbolader, indem die Rotorwelle und das Turbinenrad mit einem Verfahren nach einer der vorstehend beschriebenen bevorzugten Ausführungsformen des ersten und/oder zweiten Aspekts verbunden sind.

Die Erfindung macht sich im dritten Aspekt dieselben Vorteile zunutze wie die Verfahren der ersten beiden Aspekte. Bevorzugte Ausführungsformen der ersten beiden Aspekte sind zugleich bevorzugte Ausführungsformen des dritten Aspekts, weswegen diesbezüglich auf die obigen Ausführungen verwiesen wird.

Insbesondere wird ein Turbolader vorgeschlagen, bei dem das Turbinenrad und die Rotorwelle lötfrei unmittelbar aneinander befestigt sind, wobei an einer Fügestelle jeweils ein Fügeabschnitt des Turbinenrads und ein Fügeabschnitt der Rotorwelle mit einem Zusatzwerkstoff überzogen sind, der an der Fügestelle angelagert ist. Die Fügeabschnitte liegen vorzugsweise unmittelbar aneinander an.

In einer weiteren bevorzugten Ausführungsform bilden die Fügeabschnitte eine umlaufende Nut an der Fügestelle aus, die vorzugsweise eine oder mehrere konisch verlaufende Ausnehmungsflanken aufweist, wobei weiter vorzugsweise die Fügestelle partiell oder vollständig mit angelagertem Zusatzwerkstoff verfüllt ist.

In einer weiteren bevorzugten Ausführungsform ist der angelagerte Zusatzwerkstoff ein elektrochemisch abgeschiedener Werkstoff, vorzugsweise ein galvanischer Überzug.

In einer weiteren bevorzugten Ausführungsform ist der angelagerte Zusatzwerkstoff ein mittels thermischen Spritzens aufgetragener Überzug, insbesondere mittels Hochgeschwindigkeits-Kaltgasspritzen, oder Hochgeschwindigkeits-Flammspritzens.

In einer weiteren bevorzugten Ausführungsform ist die Fügestelle an einer oder beiden Stirnflächen von Turbinenrad und Rotorwelle ausgebildet, und der Zusatzwerkstoff ist an einer oder beiden Stirnflächen angelagert.

Weiter vorzugsweise sind das Turbinenrad und die Rotorwelle an der Fügestelle miteinander mittels Reibschweißen verschweißt.

In einer weiteren bevorzugten Ausführungsform, insbesondere wenn ein Verfahren gemäß dem zweiten Aspekt zum Herstellen der Verbindung zwischen Rotorwelle und Turbinenrad eingesetzt wurde, ist die Rotorwelle mittels Reibschweißen mit einem Einleger fest verbunden, der in das Turbinenrad in eine negativ korrespondierend ausgebildete Ausnehmung eingeführt ist. Der Einleger und die Rotorwelle sind in einen Fügeabschnitt an einer Fügestelle miteinander per Reibschweißen verbunden. Der Einleger und die Rotorwelle sind formschlüssig miteinander verbunden.

In einer weiteren bevorzugten Ausführungsform weist der Einlieger an einem mit dem Fügeabschnitt gegenüberliegenden Ende einen Kopfabschnitt auf, der sich an einem inneren Absatz in der Ausnehmung des zu fügenden Turbinenrads abstützt.

In einer weiteren bevorzugten Ausführungsform erstreckt sich die Ausnehmung vollständig durch das Turbinenrad hindurch und weist eine Länge auf, welche die Länge des Einliegers überschreitet. Sowohl der Fügeabschnitt der Rotorwelle als auch der Einlieger sind in die Ausnehmung des Turbinenrads eingeführt, und die Fügestelle wird vom Turbinenrad überdeckt.

In einer weiteren bevorzugten Ausführungsform erstreckt sich eine Schweißwulst an der Fügestelle in einer umlaufenden Nut im Inneren der Ausnehmung des Turbinenrads, und/oder in einer Kavität zwischen dem Turbinenrad und der Rotorwelle, überdeckt vom Turbinenrad.

Die Erfindung wird im Folgenden unter Bezugnahme auf die beigefügten Figuren anhand bevorzugter Ausführungsbeispiele näher beschrieben.

Diese sollen die Ausführungsformen nicht notwendigerweise maßstäblich darstellen, vielmehr ist die Zeichnung, wo zur Erläuterung dienlich, in schematisierter und/oder leicht verzerrter Form ausgeführt.

Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen.

Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein.

Weitere Vorteile, Merkmale und Einzelheiten der Erfindung ergeben sich aus der nachfolgenden Beschreibung der bevorzugten Ausführungsformen sowie anhand der Figuren; diese zeigen in:
- FIG. 1: eine schematische Darstellung eines ersten Ausführungsbeispiels eines Verfahrens gemäß dem ersten Aspekt,
- FIG. 2: eine schematische Darstellung einer Verbindung eines Turbinenrads mit einer Rotorwelle, hergestellt mit einem Verfahren gemäß FIG. 1,
- FIG. 3: eine schematische Darstellung einer weiteren Verbindung eines Turbinenrads mit einer Rotorwelle, hergestellt mit einem Verfahren gemäß FIG. 1,
- FIG. 4: eine schematische Darstellung eines weiteren Ausführungsbeispiels eines Verfahrens gemäß dem ersten Aspekt,
- FIG. 5: eine schematische Darstellung einer Verbindung eines Turbinenrads mit einer Rotorwelle hergestellt mit einem Verfahren gemäß FIG. 4 in einem ersten Stadium,
- FIG. 6: eine schematische Darstellung der Verbindung gemäß FIG. 5 in einem zweiten Stadium,
- FIG. 7: eine schematische Darstellung eines ersten Ausführungsbeispiels eines Verfahrens gemäß dem zweiten Aspekt,
- FIG. 8: eine schematische Darstellung einer Verbindung eines Turbinenrads mit einer Rotorwelle, hergestellt mit einem Verfahren gemäß FIG. 7, und
- FIG. 9: eine schematische Darstellung einer weiteren Verbindung eines Turbinenrads mit einer Rotorwelle, hergestellt mit einem Verfahren gemäß FIG. 7.

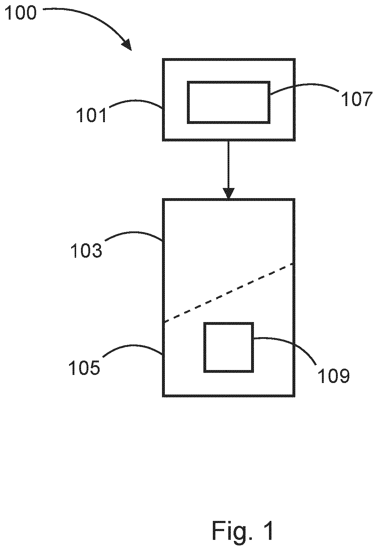

FIG. 1 bis FIG. 3 zeigen ein Verfahren 100 gemäß einem ersten Aspekt der Erfindung zum Verbinden eines Turbinenrads 1 mit einer Rotorwelle 3. Das Turbinenrad 1 weist einen Fügeabschnitt 5 auf. Die Rotorwelle 3 weist ebenfalls einen Fügeabschnitt 7 auf. Zumindest der Fügeabschnitt 5 des Turbinenrads 1 ist aus einem nicht-reibschweißfähigen Werkstoff ausgebildet. Zum Verbinden des Turbinenrads 1 mit der Rotorwelle 3 wird in Schritt 101 das Turbinenrad 1 und die Rotorwelle 3 relativ zueinander derart positioniert, dass die Fügeabschnitte 5, 7 einander zugewandt sind und eine gemeinsame Fügestelle 9 definieren.

In Schritt 103 wird sodann ein Zusatzwerkstoff 51, 51' an der Fügestelle 9 angelagert.

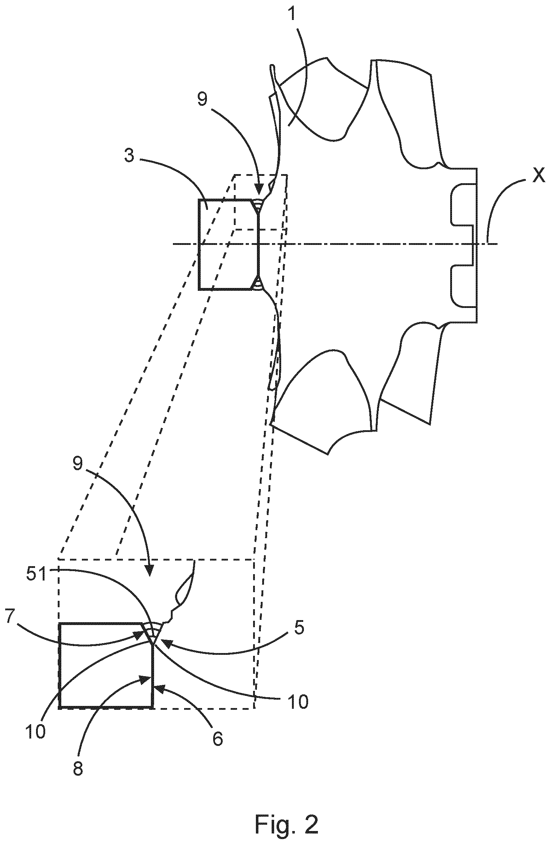

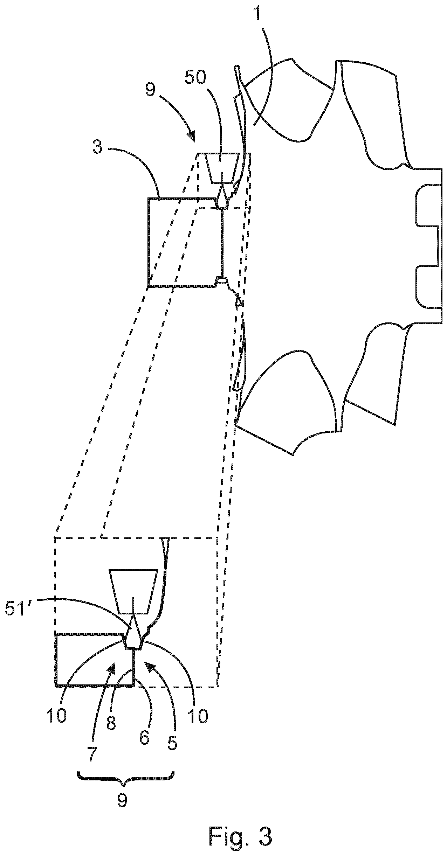

In Schritt 105 wird das Turbinenrad 1 mit der Rotorwelle 3 mittels des angelagerten Zusatzwerkstoffs 51, 51' verbunden. Die Schritte des Anlagerns 103 und des Verbindens 105 vollziehen sich in dem Verfahren 100 im Wesentlichen zeitgleich über einen bestimmten Zeitraum. In beiden Varianten der FIG. 2 und FIG. 3 sind die Fügeabschnitte 5, 7 derart positioniert, dass sie direkt aneinander anliegen. Die Fügestelle 9 nimmt die Form einer umlaufenden Nut an, die aus den beiden Fügeabschnitten 5, 7 besteht. In beiden Varianten weisen die Fügeabschnitte jeweils eine konisch verlaufende Ausnehmungsflanke 10 auf. Das Bilden der umlaufenden Nut an der Fügestelle ist symbolisch als Schritt 107 in FIG. 1 gekennzeichnet.

In der Verfahrensvariante gemäß FIG. 2 wird das Anlagern des Zusatzwerkstoffs 51 mittels Galvanotechnik vorgenommen.

In der Variante gemäß FIG. 3 erfolgt das Anlagern des Zusatzwerkstoffs 5 1' an der Fügestelle 9 mittels Abscheiden von Metallpartikeln aus einer Düse 50 im Wege des Kaltgasspritzens.

Soweit erforderlich, kann nach dem Anlagern des Zusatzwerkstoffs 51, 51' in Schritt 109 noch ein Abkühlen der Fügestelle 9 vorgenommen werden.

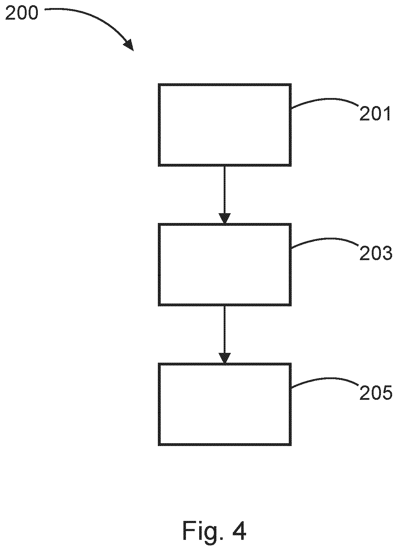

In FIG. 4 bis FIG. 6 ist ein Verfahren 200 zum Verbinden eines Turbinenrads 1' mit einer Rotorwelle 3' gezeigt, ebenfalls im Einklang mit dem ersten Aspekt der Erfindung. Das Verfahren umfasst in Schritt 201 das Anlagern eines Zusatzwerkstoffs 5 1' an einer Fügestelle 9', die an einem Fügeabschnitt 5' des Turbinenrads 1' angeordnet ist. Nach dem Abscheiden des Zusatzwerkstoffs 51' an dem Turbinenrad 1' werden das Turbinenrad 1' und die Rotorwelle 3' in Schritt 203 derart relativ zueinander positioniert, dass die Fügeabschnitte 5' und 7' des Turbinenrads 1' bzw. der Rotorwelle 3' einander zugewandt sind, insbesondere mit ihren Stirnflächen 6, 8 aneinander anliegen. Durch relative Rotation in Richtung des Pfeils R um eine Längsachse X wird die Rotorwelle 3' mit dem angelagerten Zusatzwerkstoff 51' verschweißt und hierdurch eine feste Verbindung zwischen der Rotorwelle 3' und dem Turbinenrad 1' geschaffen.

Die Rotorwelle 3' weist an ihrer zu dem Fügeabschnitt 7' gehörenden Stirnfläche 8 eine Ausnehmung 11 auf, in die hinein sich eine Schweißwulst aus dem Zusatzwerkstoff 51 ' ausbreiten kann. Zusätzlich kann sich eine Schweißwulst aus dem Zusatzwerkstoff 51' außerhalb des Umfangs des Turbinenrads 1' und der Rotorwelle 3' bilden, die erforderlichenfalls im Nachgang abgeschliffen werden kann.

Der Auftrag des Zusatzwerkstoffs 51' erfolgt vorzugsweise wie in dem Ausführungsbeispiel gemäß FIG. 3 mittels einer Düse 50 im Wege des Kaltgasspritzens.

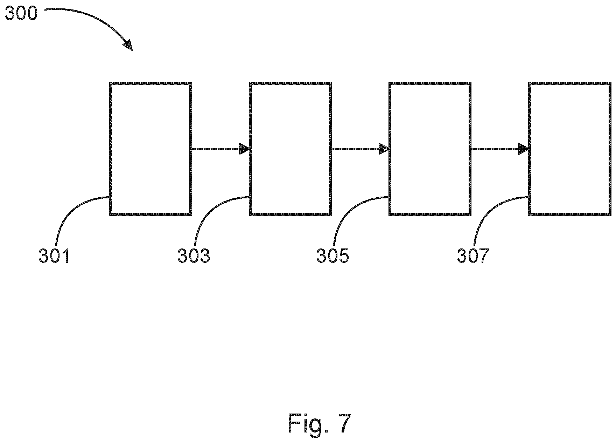

In FIG. 7 bis FIG. 9 ist ein Verfahren zum Verbinden eines Turbinenrads 1" mit einer Rotorwelle 3'' gemäß dem zweiten Aspekt der Erfindung gezeigt. Das Verfahren 300 umfasst in einem Schritt 301 das Bereitstellen des Turbinenrads 1" mit einer Längsachse X, einer sich im Inneren des Turbinenrads 1" erstreckenden Ausnehmung 2 entlang der Längsachse X, die zur drehfesten Aufnahme eines Einlegers 13 eingerichtet ist, insbesondere eines negativ korrespondierend zu der Ausnehmung 2 ausgebildeten Einlegers 13, und einer Rotorwelle 3". Der Einleger 13 weist einen Fügeabschnitt 15 auf, und die Rotorwelle 3" weist einen Fügeabschnitt 7" auf. Beide Fügeabschnitte 15, 7" sind aus einem reibschweißfähigen Werkstoff ausgebildet.

In Schritt 303 erfolgt ein Einführen des Einlegers 13 in die Ausnehmung 2 des Turbinenrads 1" hinein.

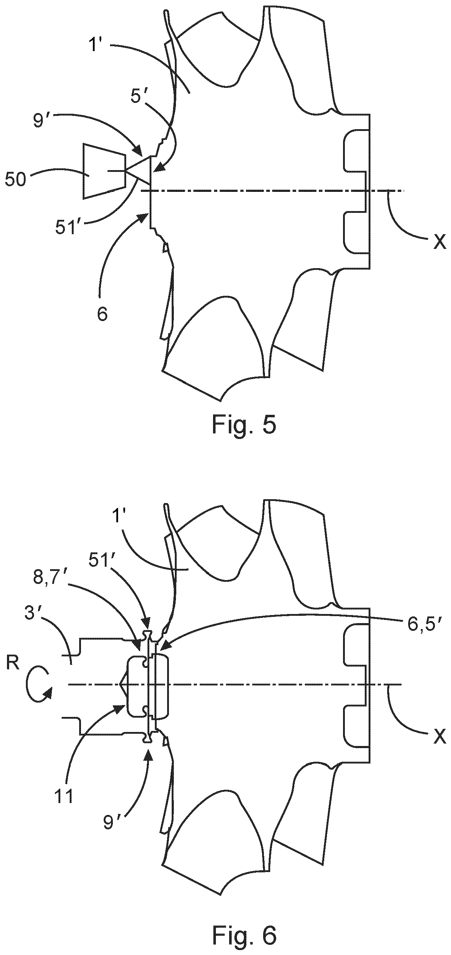

In Schritt 305 wird das Turbinenrad 1" mitsamt dem Einleger 13 relativ zu der Rotorwelle 3" derart positioniert, dass die Fügeabschnitte 15, 7" einander zugewandt sind und eine gemeinsame Fügestelle 9" definieren. In Schritt 307 erfolgt ein Verbinden des Turbinenrads 1" mit der Rotorwelle 3" mittels Verschweißen des Einlegers 13 mit der Rotorwelle 3", insbesondere mittels Reibschweißen analog zu dem Ausführungsbeispiel der FIG. 6, wie etwa durch Rotationsreibschweißen, angedeutet durch den Pfeil R.

Die Ausnehmung 2 weist einen nichtzylindrischen Formschlussabschnitt 14 auf, und der Einleger 13 ist derart in die Ausnehmung 2 eingeführt, dass er formschlüssig in den Formschlussabschnitt 14 eingreift.

Das Turbinenrad 1" weist eine Ausnehmung 17 auf, in der sich eine Schweißwulst 53 umlaufend ausbilden kann. Die Stirnflächen 6', 8 des Einlegers 13 und der Rotorwelle 3" weisen an der Fügestelle 9" jeweils eine Ausnehmung 11 auf, die gemeinsam eine Kavität 19 ausbilden, in der sich ebenfalls eine Schweißwulst 53 ausbilden kann.

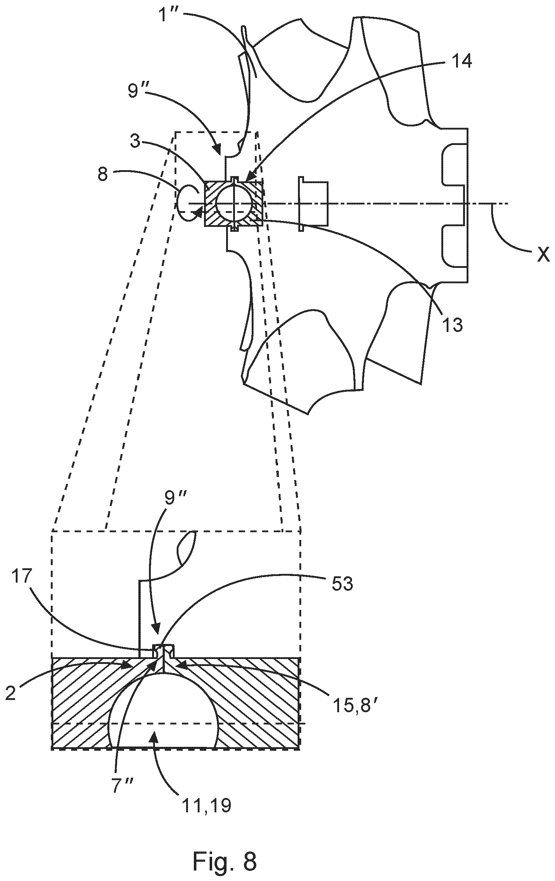

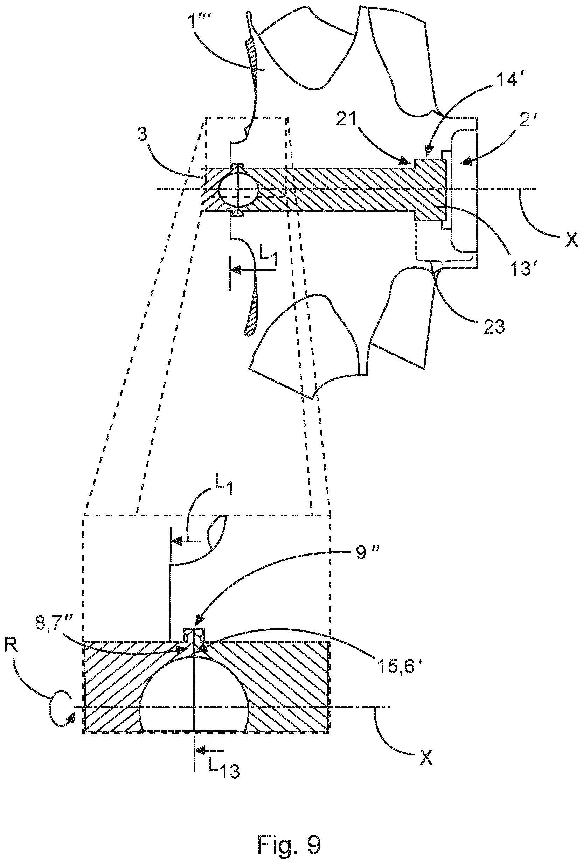

Sowohl in FIG. 8 als auch in FIG. 9 weist das Turbinenrad 1", 1‴ eine Länge L₁ auf, die größer ist als eine Länge L₁₃ des Einlegers 13, 13'. Die Fügestelle 9" ist demzufolge durch das Turbinenrad 1", 1‴ überdeckt. Die Rotorwelle 3" wird ebenso wie der Einleger 13 in die Ausnehmung 2, 2' des Turbinenrads 1", 1‴ eingeführt.

Das Ausführungsbeispiel der FIG. 9 unterscheidet sich vom Ausführungsbeispiel der FIG. 8 dahingehend, dass das Turbinenrad 1‴ eine vollständig entlang der Längsachse X durchgehend ausgebildete Ausnehmung 2' aufweist, in die der Einleger 13' eingeführt ist. An seinem dem Fügeabschnitt 15 gegenüberliegenden Ende weist der Einleger 13 einen Kopfabschnitt 23 auf, der sich an einem inneren Absatz 21 der Ausnehmung 2' abstützt.

In Zusammenschau schlägt die Erfindung folglich mehrere Verfahrensvarianten zum lötfreien Verbinden eines Turbinenrads 1, 1', 1", 1‴ mit einer Rotorwelle 3, 3', 3" vor, die einfach zu handhaben sind, und eine feste Verbindung der vorgenannten Bauteile ermöglichen. Insbesondere ist dies gemäß dem Konzept der Erfindung vorteilhaft mit einer --wie insbesondere aus FIG. 1, FIG. 4 und FIG. 7 ersichtlich-- vergleichsweise geringen Anzahl von Verfahrensschritten umsetzbar.

### BEZUGSZEICHENLISTE

- 1, 1', 1", 1‴: Turbinenrad
- 2, 2': Ausnehmung
- 3, 3', 3": Rotorwelle
- 5, 5': Fügeabschnitt, Turbinenrad
- 6: Stirnfläche, Turbinenrad
- 6': Stirnfläche, Einleger
- 7, 7', 7": Fügeabschnitt, Rotorwelle
- 8: Stirnfläche, Rotorwelle
- 9, 9', 9'': Fügestelle
- 10: Ausnehmungsflanke
- 11: Ausnehmung
- 13, 13': Einleger
- 14: Formschlussabschnitt
- 15: Fügeabschnitt, Einleger
- 17: Ausnehmung, Turbinenrad
- 19: Kavität
- 21: Absatz
- 23: Kopfabschnitt

- 50: Düse
- 51, 51': Zusatzwerkstoff
- 53: Schweißwulst

- 100: Verfahren
- 101: Schritt
- 103: Schritt
- 105: Schritt
- 107: Schritt
- 109: Schritt
- 200: Verfahren
- 201: Schritt
- 203: Schritt
- 300: Verfahren
- 301: Schritt
- 303: Schritt
- 305: Schritt
- 307: Schritt

- L₁, L₁₃: Länge
- R: Pfeil
- X: Längsachse

## Patentansprüche

1. Verfahren (100, 200) zum lötfreien Verbinden eines Turbinenrads (1, 1') mit einer Rotorwelle (3, 3') eines Turboladers, insbesondere eines Abgasturboladers, wobei das Turbinenrad (1, 1') und/oder die Rotorwelle (3, 3') jeweils einen Fügeabschnitt (5, 7; 5', 7') aus einem nicht-reibschweißfähigen Werkstoff aufweisen, umfassend die Schritte:
- Positionieren des Turbinenrades (1, 1') und der Rotorwelle (3, 3') relativ zueinander derart, dass die Fügeabschnitte (5, 7; 5', 7') einander zugewandt sind und eine gemeinsame Fügestelle (9, 9') definieren,
- Anlagern eines Zusatzwerkstoffs an der Fügestelle (9, 9'), und
- Verbinden des Turbinenrades (1, 1') und der Rotorwelle (3, 3') mittels des Zusatzwerkstoffs.

2. Verfahren (100, 200) nach Anspruch 1,
wobei die Rotorwelle (3, 3') und das Turbinenrad (1, 1') derart positioniert werden, dass die Fügeabschnitte (5, 7; 5', 7') aneinander anliegen.

3. Verfahren (100) nach Anspruch 1 oder 2,
wobei die Fügeabschnitte (5, 7) jeweils eine außen umlaufende Ausnehmung aufweisen, und der Schritt des Positionierens umfasst: Bilden einer umlaufenden Nut in der Fügestelle aus den beiden Fügeabschnitten.

4. Verfahren (100) nach einem der vorstehenden Ansprüche,
wobei die Fügeabschnitte (5, 7; 5', 7') jeweils eine konisch verlaufende Ausnehmungsflanke (10) aufweisen.

5. Verfahren (100) nach einem der vorstehenden Ansprüche,
wobei der Schritt des Anlagerns fortgeführt wird, bis die Fügestelle (9, 9') partiell oder vollständig verfüllt ist.

6. Verfahren nach einem der vorstehenden Ansprüche,
wobei der Zusatzwerkstoff ein metallischer Werkstoff ist, der vorzugsweise ein Titanaluminid oder ein warmfester Stahl ist oder einen solchen aufweist.

7. Verfahren (100) nach einem der vorstehenden Ansprüche,
wobei das Anlagern und das Verbinden zugleich mittels elektrochemischen Abscheidens erfolgen, vorzugsweise mittels Galvanotechnik.

8. Verfahren (100) nach einem der Ansprüche 1 bis 6,
wobei das Anlagern und das Verbinden zugleich mittels thermischen Beschichtens erfolgen, vorzugsweise mittels thermischen Spritzens, besonders bevorzugt mittels eines der Folgenden:
Kaltgasspritzen, insbesondere Hochgeschwindigkeits-Kaltgasspritzen, oder
Flammspritzen, insbesondere Hochgeschwindigkeits-Flammspritzen.

9. Verfahren (100) nach Anspruch 8,
wobei der Schritt des Verbindens ferner umfasst: Abkühlen der Fügestelle (9, 9') nach erfolgtem Anlagern des Zusatzwerkstoffs.

10. Verfahren (200) nach Anspruch 1,
wobei die Fügeabschnitte (5', 7') jeweils eine Stirnfläche (6, 8) aufweisen, und die Fügestelle (9') an einer oder beiden Stirnflächen (6, 8) ausgebildet ist.

11. Verfahren (200) nach Anspruch 10,
wobei das Anlagern des Zusatzwerkstoffs auf eine oder beide Stirnflächen (6, 8) erfolgt, bevor die Rotorwelle und das Turbinenrad (1') positioniert werden.

12. Verfahren (200) nach Anspruch 10 oder 11,
wobei das Anlagern des Zusatzwerkstoffs mittels thermischen Beschichtens erfolgt, vorzugsweise mittels thermischen Spritzens, besonders bevorzugt mittels eines der Folgenden:
Kaltgasspritzen, insbesondere Hochgeschwindigkeits-Kaltgasspritzen, oder
Flammspritzen, insbesondere Hochgeschwindigkeits-Flammspritzen.

13. Verfahren (200) nach einem der Ansprüche 10 bis 12,
wobei das Verbinden der Rotorwelle (3') und des Turbinenrades (1') nach dem Schritt des Anlagerns erfolgt.

14. Verfahren (200) nach Anspruch 13,
wobei das Verbinden der Rotorwelle (3') und des Turbinenrades (1') mittels Reibschweißen, vorzugsweise Rotationsreibschweißen, an der Fügestelle (9') erfolgt, indem der angelagerte Zusatzwerkstoff verschweißt wird.

15. Verfahren (300) zum Verbinden eines Turbinenrads (1", 1‴) mit einer Rotorwelle, wobei das Turbinenrad (1", 1‴) zumindest partiell aus einem nicht-reibschweißfähigen Werkstoff ausgebildet ist, umfassend die Schritte:
- Bereitstellen eines Turbinenrades (1", 1‴) mit einer Längsachse (X), einer inneren sich entlang der Längsachse erstreckenden Ausnehmung (2, 2'), eines zur drehfesten Aufnahme negativ korrespondierend ausgebildeten Einlegers (13, 13'), und einer Rotorwelle (3"), wobei der Einleger (13, 13') und die Rotorwelle (3") jeweils einen Fügeabschnitt (15, 7") aufweisen, der aus einem reibschweißfähigen Werkstoff ausgebildet ist,
- Einführen des Einlegers (13, 13') in die Ausnehmung des Turbinenrades (1", 1‴),
- Positionieren des Turbinenrades (1", 1‴) samt Einleger (13, 13') und der Rotorwelle (3") relativ zueinander derart, dass die Fügeabschnitte (15, 7") einander zugewandt sind und eine gemeinsame Fügestelle (9") definieren, und
- Verbinden des Turbinenrades (1", 1‴) und der Rotorwelle (3") mittels Verschweißen des Einlegers (13, 13') und der Rotorwelle (83'), vorzugsweise mittels Reibschweißen, besonders bevorzugt Rotationsreibschweißen, an der Fügestelle (9'').

16. Verfahren (300) nach Anspruch 15,
wobei die Ausnehmung einen nichtzylindrischen Formschlussabschnitt (14, 14') aufweist, und der Einleger (13, 13') derart in die Ausnehmung (2, 2') eingeführt wird, dass er formschlüssig in den Formschlussabschnitt (14, 14') eingreift.

17. Verfahren (300) nach Anspruch 15 oder 16,
wobei die Ausnehmung (2') sich vollständig durch das Turbinenrad (1‴) hindurch erstreckt und der Einleger (13') an einem dem Fügeabschnitt (15) gegenüberliegenden Ende einen Kopfabschnitt (23) aufweist, und die Ausnehmung (2') einen inneren Absatz (21) aufweist, wobei der Kopfabschnitt (23) sich im eingelegten Zustand an dem Absatz (21) abstützt.

18. Verfahren (300) nach einem der Ansprüche 15 bis 17,
wobei die Ausnehmung (2, 2') eine Länge (Li) aufweist, welche die Länge (L₁₃) des Einlegers (13, 13') überschreitet, und
wobei der Fügeabschnitt (7") der Rotorwelle ebenfalls in die Ausnehmung (2, 2') des Turbinenrades (1", 1‴) eingeführt wird, so dass das Turbinenrad (1", 1‴) die Fügestelle (9") überdeckt, wenn der Einleger (13, 13') eingelegt ist, und das Turbinenrad (1", 1‴) und die Rotorwelle (3") positioniert sind.

19. Verfahren (300) nach einem der Ansprüche 15 bis 18,
wobei in der Ausnehmung (2, 2') eine umlaufende Nut (17) ausgebildet ist, und die Rotorwelle (3''), das Turbinenrad (1", 1‴) und der Einleger (13, 13') derart positioniert werden, dass die Fügestelle (9") in Längsrichtung mit der Nut (17) zusammenfällt, und wobei sich vorzugsweise beim Verschweißen eine Schweißwulst (53) in der Nut (17) bildet.

20. Verfahren (300) nach einem der Ansprüche 15 bis 19,
wobei die Rotorwelle (3'') und/oder der Einleger (13, 13') in ihren Fügeabschnitten (7", 15) eine Stirnfläche (6', 8) mit einer Ausnehmung (11) aufweisen, und wobei die Rotorwelle (3"), das Turbinenrad (1", 1‴) und der Einleger (13, 13') derart positioniert werden, dass an der Fügestelle (9") eine Kavität (19) gebildet wird, und wobei sich vorzugsweise beim Verschweißen eine Schweißwulst (53) in der Kavität (19) bildet.

21. Turbolader, insbesondere Abgasturbolader, mit einer Rotorwelle und einem mit der Rotorwelle verbundenen Turbinenrad (1, 1', 1'', 1‴),
**dadurch gekennzeichnet, dass** die Rotorwelle (3,3 `,3 ` `) und das Turbinenrad (1, 1', 1", 1‴) mit einem Verfahren nach einem der vorstehenden Ansprüche verbunden wurden.
